(19) Europäisches Patentamt
European Patent Office
Office européen des brevets

(11) EP 0 462 732 B1

(12) **EUROPEAN PATENT SPECIFICATION**

(45) Date of publication and mention
of the grant of the patent:
**13.08.1997 Bulletin 1997/33**

(51) Int Cl.⁶: **G11B 20/10**

(21) Application number: **91305162.9**

(22) Date of filing: **07.06.1991**

(54) **Method and apparatus for setting a read window in a magnetic disk drive**

Verfahren und Vorrichtung zum Einstellen eines Lesefensters in einer Magnetplatteneinheit

Méthode et appareil d'ajustement d'une fenêtre de lecture dans un lecteur de disques magnétiques

(84) Designated Contracting States:
**DE FR GB IT NL**

(30) Priority: **19.06.1990 US 540099**

(43) Date of publication of application:
**27.12.1991 Bulletin 1991/52**

(73) Proprietor: **SEAGATE TECHNOLOGY INTERNATIONAL**
**Georgetown Grand Cayman Island (KY)**

(72) Inventors:
• **Cronch, Robert**
**Oklahoma City, Oklahoma 73127 (US)**
• **Hertz, Mark D.**
**Oklahoma City, Oklahoma 73162 (US)**

• **Nguyen, Hieu V.**
**Oklahoma City, Oklahoma 73114 (US)**

(74) Representative: **Sturt, Clifford Mark et al**
**J. MILLER & CO.**
**34 Bedford Row,**
**Holborn**
**London WC1R 4JH (GB)**

(56) References cited:
• **PATENT ABSTRACTS OF JAPAN vol. 9, no. 177 (P-375) 23 July 1985, & JP-A-60 050755 (RICOH KK) 20 March 1985,**
• **PATENT ABSTRACTS OF JAPAN vol. 9, no. 24 (P-331) 31 January 1985, & JP-A-59 167813 (TOSHIBA KK) 21 September 1984,**
• **IBM TECHNICAL DISCLOSURE BULLETIN, VOL 30, No 6, Nov 87, pages 38-40**

## Description

The present invention relates to a method and apparatus for setting a read window in a magnetic disk drive.

A magnetic disk, such as one used in a computer disk drive, is a flat circular platter with a magnetic surface. Data is stored on the magnetic surface by selective polarisation of portions of the magnetic surface. The presence or absence of polarity transitions between the polarised portions represents particular binary values. Typically, the magnetically polarised portions are arranged in a plurality of radially concentric tracks on the magnetic surface to aid in location and read back of the data.

In order to read back the data recorded on the magnetic surface, a magnetic transducer moves relative to the magnetic disk along a given track. The magnetic transducer generates an electrical signal (the "read signal"), which represents the states of polarisation encountered along the track. Pulses in the read signal correspond to the magnetically polarised portions of the magnetic disk.

Ideally, the read signal would not be influenced by any factors other than the magnetically polarised portions. However, other factors do influence the read signal and must be taken into account in processing the read signal.

During processing of the read signal, the processing logic (i.e. the read chain logic) is configured to recover data from the read signal during a certain period in time, known as a read window. The read window represents the time during which the pulses occurring in the read signal, which represent digital data stored on the magnetic disk, are taken as valid. However, the actual read window during which the pulses are taken as valid can in practice shift in time due to the ageing of the circuitry in the magnetic disk drive. Also, as the circuitry heats up during operation, the temperature differential can cause the actual read window to shift. Further, the optimum read window can shift due to process changes in the magnetic disk drive or due to part-to-part timing variation in the read chain circuitry of the magnetic disk drive.

It is an object of the present invention, at least in its preferred form, to overcome such problems.

IBM Technical Disclosure Bulletin 30 (1987) Nov., No. 6, p. 38-40, titled "Window-shifting mechanism in data separator", discloses a window shifting mechanism in a data separator. The mechanism effectively shifts the window in which a bit is read from a disk file by its head so as to assure that the bit is correctly read. The mechanism consists of means which utilizes a method of rapidly establishing a new definition of the window centre provided by a VFO (variable frequency oscillator) controlling the position of the window with respect to disk rotation in which a certain bit is read and the method of employing this window-skewing action for error recovery.

The present invention provides a technique of adjusting a window centre setting in a read chain of a magnetic disk drive. A number of read operations are performed by a magnetic disk drive to read data from a magnetic disk. A number of read errors are detected during the read operations and error types are determined. Adjustment of the window settings in the read chain is controlled based on the number of errors detected and the types of errors determined.

Thus, according to one aspect of the present invention, there is provided a method of adjusting a window centre in a read channel of a magnetic drive suitable for reading data from a magnetic disk, including reading data from the magnetic disk by performing a number of read operations, characterised by detecting a number of shift right read errors made while reading the data, said shift right read errors being caused by the read window centre setting being shifted to the right of the optimal setting, detecting a number of shift left read errors, said shift left read errors being caused by the read window centre being shifted to the left of the optimal setting made while reading the data, and determining an adjusted window centre setting based on the number of shift right read errors detected and the number of shift left read errors detected.

According to another aspect of the present invention, there is provided apparatus for determining an adjusted window centre setting in a read channel of a magnetic disk drive, the magnetic disk drive being suitable for reading data from a magnetic disk, including reading means for reading data from the magnetic disk by performing a number of read operations, characterised by shift right error detection means coupled to the reading means for detecting a number of shift right read errors during the read operations, said shift right read errors being caused by the read window centre setting being shifted to the right of the optimal setting, shift left error detection means coupled to the reading means for detecting a number of shift left read errors during the read operations, said shift left read errors being caused by the read window centre setting being shifted to the left of the optimal setting and adjustment means coupled to the shift right and shift left error detection means for determining an adjusted window centre setting based on the number of shift right read errors detected and the number of shift left read errors detected.

The invention is described further, by way of example, with reference to the accompanying drawings, in which:

Figure 1a is a schematic plan view of a conventional disk drive;
Figure 1b is a partial cross sectional view of the conventional disk drive shown in Figure 1a;
Figure 2 is a wave form representing a magnetic transducer generated read signal in the disk drive;
Figure 3 is a block diagram of apparatus according to the invention, which may be included in a control circuit of the disk drive shown in Figure 1;

Figure 4 is a wave form representing a magnetic transducer generated read signal which is shifted in time with respect to the wave form shown in Figure 2;

Figure 5 is a graph showing a number of read errors plotted against percentage deviation of a window centre setting from an optimum centre setting;

Figure 6 is a graph showing a probability of the occurrence of shift right or shift left errors plotted against time;

Figure 7 shows a portion of a transducer generated read signal corresponding with the graph shown in Figure 6;

Figures 8a, 8b and 8c show a flow chart representing one embodiment of the window centering method according to the present invention employed in the apparatus of Figure 3; and

Figure 9 is a graph showing a number of read errors plotted against window centre strobe settings.

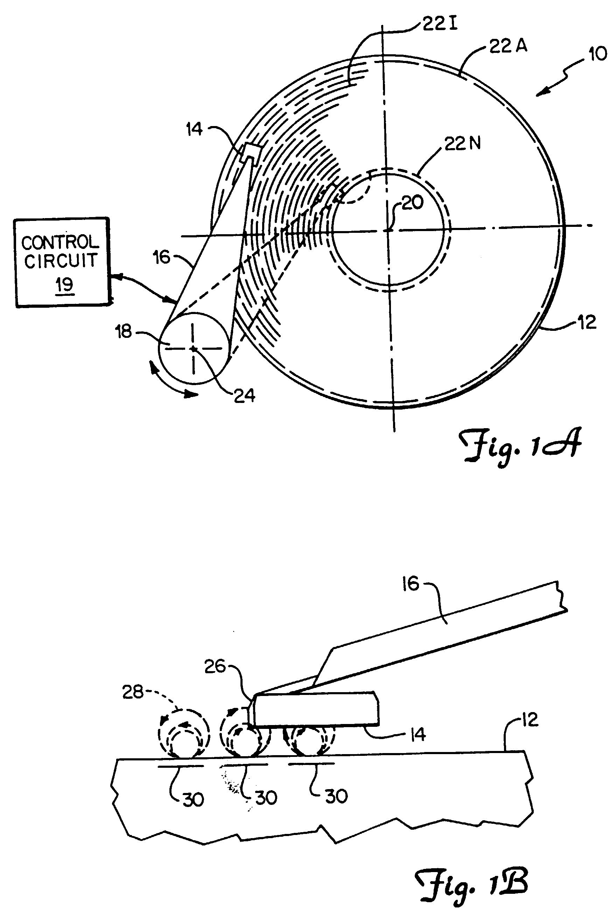

Figure 1a illustrates a portion of a conventional magnetic disk drive 10. The disk drive 10 includes a magnetic disk 12, a slider 14, an actuator arm 16, a rotary actuator 18, and a control circuit 19. Although the disk drive 10 is shown with only a single magnetic disk 12, it will be understood by those skilled in the art that the present invention is applicable to disk drives including a plurality of magnetic disks.

The magnetic disk 12 is mounted for rotation on a spindle centred on an axis 20. Data blocks are arranged on the magnetic disk 12 in a plurality of radially concentric tracks 22a to 22n. The data tracks 22a and 22n are the outer most and inner most data tracks, respectively, on the magnetic disk 12.

The slider 14 carries a magnetic transducer (transducer 26 shown in Figure 1b). As the magnetic disk 12 rotates, the slider 14 flies just over the surface of the magnetic disk 12. The slider 14 is attached to the actuator arm 16, which is, in turn, attached to the rotary actuator 18. The actuator arm 16 is mounted for rotation about an axis 24 of the rotary actuator 18. As the slider 14 flies above the surface of the magnetic disk 12, the control circuit 19 controls the rotary actuator 18 to position the slider 14 over a selected data track, for example the track 22i. If a plurality of magnetic disks were used, the control circuit 19 would be programmed to select the appropriate disk to be read from and written to.

Figure 1b shows a fragmentary sectional view of the disk drive 10. The magnetic transducer 26 is mounted on a face of the slider 14 which is perpendicular to the surface of the magnetic disk 12. As the transducer 26 flies over the magnetic disk 12, the transducer 26 senses magnetic flux lines 28 generated by polarised regions 30 of the magnetic disk 12. The magnetic transducer 26 generates a read signal 32 which is characterised by positive going or negative going transitions in pulses associated with the flux reversals of the flux lines 28 produced by the polarised portions 30. The read signal 32 is demodulated and data is recovered from the read signal 32 by the control circuit 19.

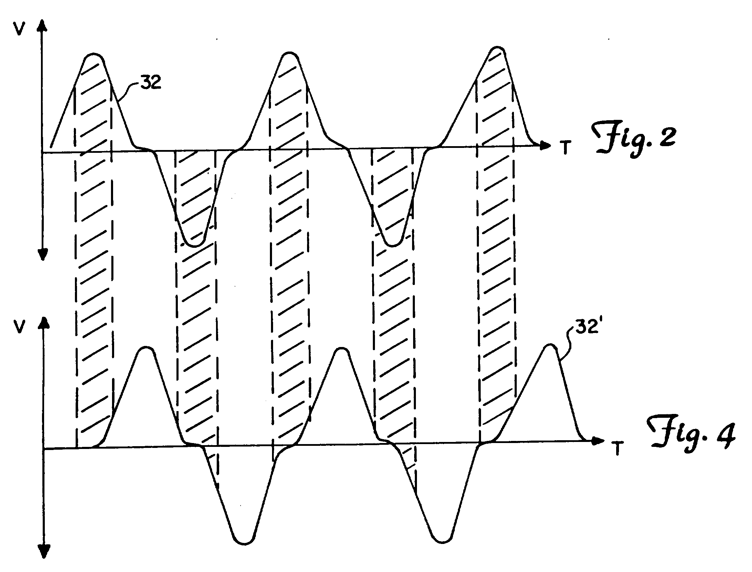

Figure 2 shows a graph of the read signal 32 generated by the transducer 26. The positive and negative going transitions of the read signal 32 correspond to the flux reversals of the flux lines 28 generated by the polarised portions 30 of the magnetic disk 12.

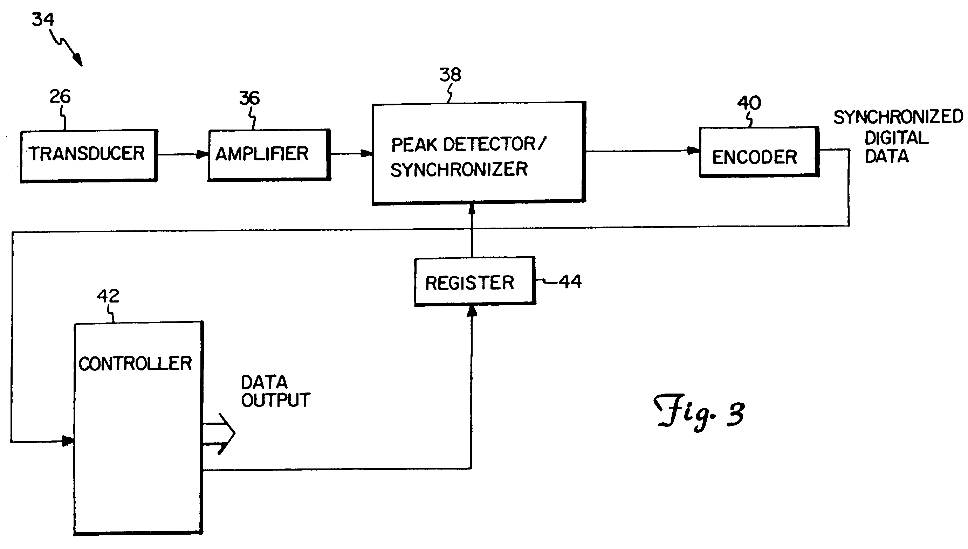

Figure 3 shows a block diagram of a read chain 34 according to the present invention, which may be employed in the disk drive 10. The read chain 34 includes the transducer 26, an amplifier 36, a peak detector/synchroniser 38, an encoder 40, a controller 42 and a register 44. The transducer 26 provides the read signal 32 to the amplifier 36. Typically, the amplifier 36 is an automatic gain control amplifier. The amplifier 36 amplifies the read signal 32 and provides the amplified signal to the peak detector/synchroniser 38. The peak detector/synchroniser 38 detects the peaks in the read signal 32 and synchronises data pulses, representative of those peaks, with a system reference clock.

In detecting the peaks of the read signal 32, the peak detector/synchroniser 38 "looks" for the peaks during a time period known as the read window. Data is recovered from the read signal 32 by determining whether the read signal 32 passes above or below a qualification threshold during the read windows. Therefore the read window should be ideally centred around the peaks of the read signal 32. If it is not, the peak detector/synchroniser 38 may not detect a proper peak and a read error will occur.

The peak detector/synchroniser 38 provides output data, recovered from the read signal 32, to the encoder 40. The encoder 40 encodes the data into synchronised digital data and provides it to the controller 42.

During a read operation, the controller 42 receives the synchronised digital data provided by the encoder 40 and processes the data either by providing it to, for example, a host computer (not shown) or by performing certain operational steps based on the digital data.

In the present invention, the controller 42 also detects read errors which occur during the read operation. Read errors can be determined in several ways. In the preferred embodiment, a pre-determined location on the magnetic disk 12, such as the track 22i or a portion of the track 22i, is pre-written with data. During operation of the magnetic disk drive 10, the pre-determined location is periodically read and read errors are recorded.

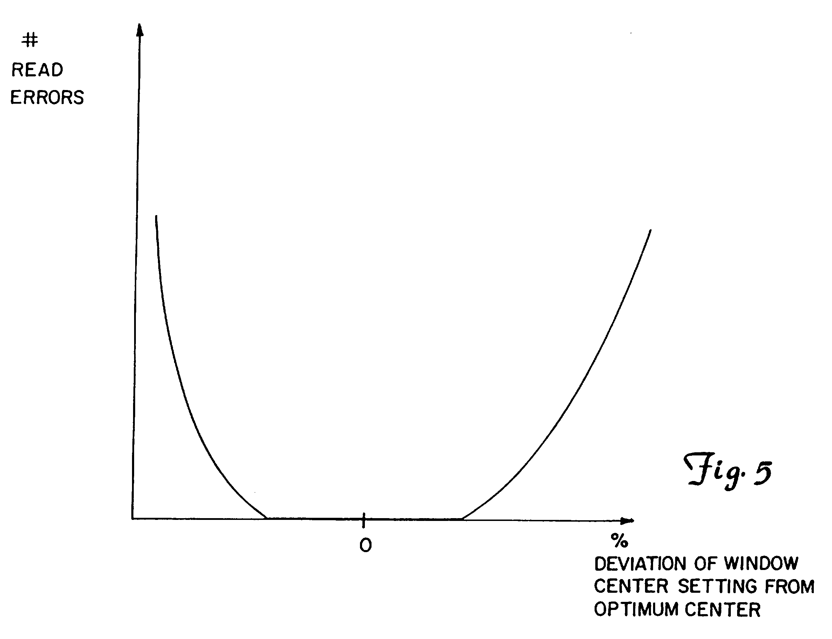

Read errors can take many forms including time shift errors (e.g. shift left or shift right read errors). Such read errors can affect the time position of the optimum read windows. Based on these read errors, the controller 42 provides a window centre setting to the register 44. The register 44, in turn, provides the window centre setting to the peak detector/synchroniser 38. The window centre setting provided by the register 44 causes the peak detector/synchroniser 38 to re-configure itself so that the read windows (shown as cross hatched areas in Figures 2 and 4) are re-positioned if necessary to be properly centred around peaks in the read signals.

The type of read error which causes the controller 42 to adjust the window centre settings in the register 44 vary. For example, Figure 4 shows a read signal 32' which corresponds to the read signal 32 shown in Figure 2 in all respects except that it has shifted to the right in time with respect to the read signal 32. Many things can cause a shift such as that shown in Figure 4. For example, where the magnetic disk drive 10 includes a plurality of magnetic disks, each having an associated slider and transducer, the delay times can vary from disk to disk and transducer to transducer. Also, as the magnetic disk drive 10 operates, the electronic components heat up. This temperature variation can cause time shifts in the read chain 34. In addition, voltage variations and component-to-component variations in the read circuitry can cause time shifting of the read signals. Further, process or part changes in the magnetic disk drive 10 can cause time shifting.

When such a time shift occurs in the read signal 32', time shift read errors (such as shift left or shift right read errors) occur. For example, where read window settings are set for the peak detector/synchroniser 38 to match those shown in Figure 2, which are ideally centred around the peaks of the read signal 32, they are not properly set when a time shift results in the read signal 32' as shown in Figure 4. If such a shift occurs, and the read window is not correspondingly re-set, the peak detector/synchroniser 38 will be incapable of recovering data from the read signal 32' properly. Thus, adjustment of the window centre settings in the register 44 is required.

Coarse Tuning

Figure 5 is a graph showing the number of read errors plotted against the percentage deviation of the window centre setting, in the register 44, from the window centre which would be ideal for the read signal 32. Figure 5 shows that, as the window centre setting deviates to the right of the optimum window centre (represented by 0% deviation), the number of read errors detected stays at a minimum level for a certain amount of time and then begins to rise. Thus, it is apparent that, so long as the window setting deviates from the optimal window centre but is within the optimal read window, the error rate does not increase greatly.

However, the further the window centre setting deviates from the optimal setting, the greater the number of read errors.

The curve shown in Figure 5 can be determined by pre-setting the window centre setting for the peak detector/synchroniser 38 to a nominal level and then performing read operations by reading data from the magnetic disk 12. Each time a read error is detected, the error is recorded. After a given number of read operations are performed, the window centre setting in the register 44 is adjusted to shift the window centre setting to the right by a given percentage value. Then, more read operations are performed and the number of read errors detected is recorded. This is repeated until a threshold number of errors are detected for any given window centre setting. Then, the window centre setting in the register 44 is set back to the nominal value and moved to the left in a step wise fashion. By accumulating the number of read errors detected at each stepped window centre setting, the curve in Figure 5 is determined. Thus, a suitable read window for the read chain 34 can be roughly determined.

However, it is desirable to know, as closely as possible, the exact optimum centre point within the read window. If the exact centre point is known, the window centre setting in the register 44 can be set to the appropriate value for optimum operation.

Fine Tuning

A technique of fine tuning the window centre setting is used to set the window centre to the optimum centre position within the read window. When data is read from the track, the controller 42 accumulates a number of shift left read errors and a number of shift right read errors detected during the read operation. In a 2,7 encoded bit stream, a shift left once error is the result of an asserted bit in the 2,7 encoded bit stream being de-asserted and the next bit to the immediate left being asserted. A shift left once error represents a read error that occurs as a result of the read window centre setting being shifted to the left of the optimal setting.

In addition to shift left once errors, shift left many errors are also accumulated in the controller 42. Shift left many errors also result from the read window settings being set earlier than the optimal read window. Shift left many errors are the result of an assertive bit in the 2,7 bit stream having been de-asserted and a previous bit (more than one bit to the left) being asserted. For example, in a sample 2,7 encoded bit stream 100010010000010 shift left once and shift left many errors are shown in Table 1 below.

Table 1

| Shift Left Errors | Number of Shifts |
| --- | --- |
| 100**100**010000010 | 1 |

Table 1   (continued)

| Shift Left Errors | Number of Shifts |
|---|---|
| 10**100**0010000010 | 2 |
| 11**000**0010000010 | 3 |
| 100010**10**0000010 | 1 |
| 100011**00**0000010 | 2 |
| 1000100100000**10**0 | 1 |
| 100010010001**00**0 | 2 |
| 10001001001**00**00 | 3 |
| 1000100101**00**000 | 4 |
| 100010011**00**0000 | 5 |

Shift right errors have similar characteristics to shift left errors except that they result from the read window settings being set later in time than an optimal read window. A shift right once error is the result of an asserted bit in a 2,7 encoded bit stream having been de-asserted while the adjacent bit right has been asserted. Similarly, shift right many errors are the result of a read window centre setting being set further to the right than the optimum setting. Shift right many errors occur when an asserted bit in the 2,7 encoded bit stream is de-asserted while a bit further than one bit to the right is asserted. For example, in a sample 2,7 encoded bit stream 100010010000010 shift right once and shift right many errors shown in Table 2 below.

Table 2

| Shift Right Errors | Number of Shifts |
|---|---|
| **01**0010010000010 | 1 |
| **001**010010000010 | 2 |
| **0001**10010000010 | 3 |
| 10000**10**10000010 | 1 |
| 100000**11**0000010 | 2 |
| 1000100**01**000010 | 1 |
| 1000100**00**100010 | 2 |
| 1000100**00**010010 | 3 |
| 1000100**00**001010 | 4 |
| 1000100**00**000110 | 5 |
| 1000100100000**01** | 1 |

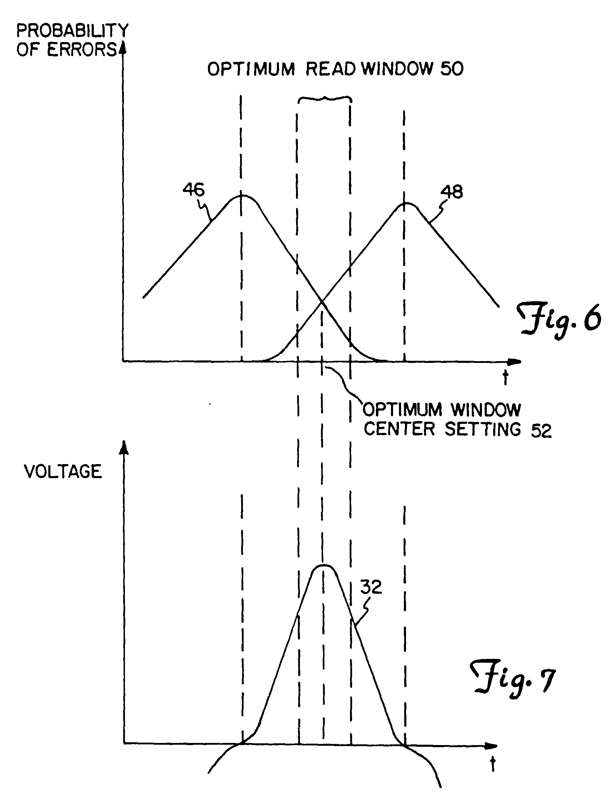

Figure 6 shows a curve 46 representing the probability that a shift left error will occur during a read operation, and a curve 48 representing the probability that a shift right error will occur during a read operation. The curves 46 and 48 are shown in relation to the optimum read window 50 and the optimum window centre setting 52. Figure 6 shows that, as the window centre setting moves to the right of the optimum window centre setting 52, the probability that a shift right error will occur during a read operation increases along a Gaussian distribution shown by the curve 48. Similarly, as the window centre setting moves to the left with respect to the optimum window centre setting 52, the probability that a shift right error will occur decreases as the probability that a shift left error increases along a Gaussian distribution represented by the curve 46.

Figure 6 also shows that, where the curves 46 and 48 intersect (where the probability that a shift left error will occur equal to the probability that a shift right error will occur) corresponds to the precise centre of the optimum read window 50, and hence provides the optimum window centre setting 52. Hence, if the number of read operations performed, the number of shift right errors that occur and a number of shift left errors that occur are accumulated, then the probability that a shift left error will occur and a probability that shift right error will occur can be determined. Also, the optimum window centre setting 52 can be achieved by varying the window centre setting until the probability that a shift left error will occur equal to the probability that a shift right error will occur.

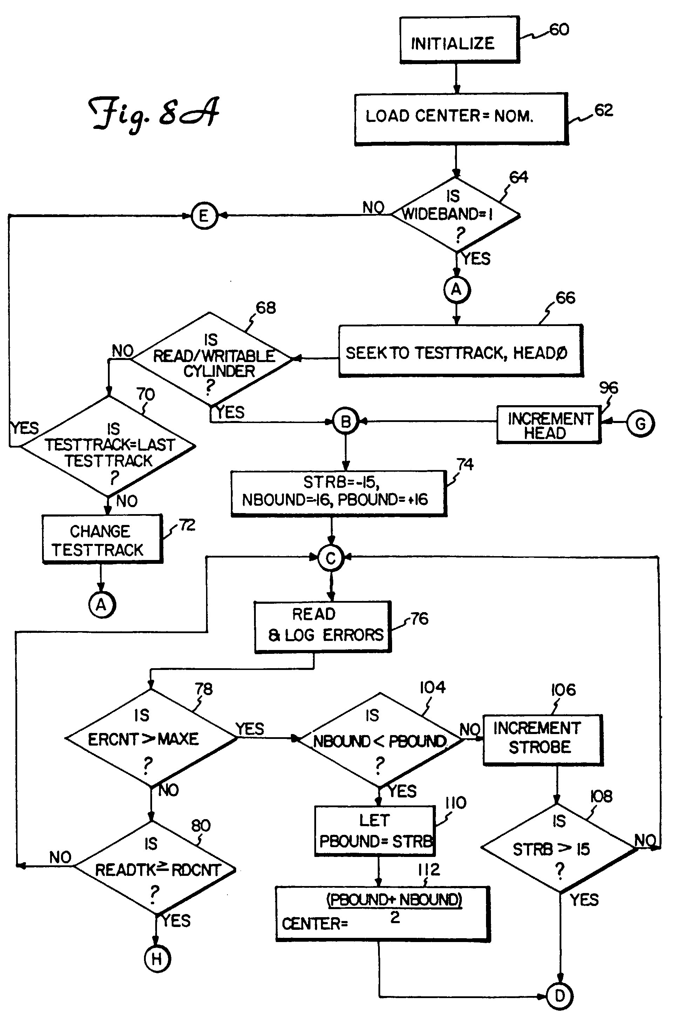

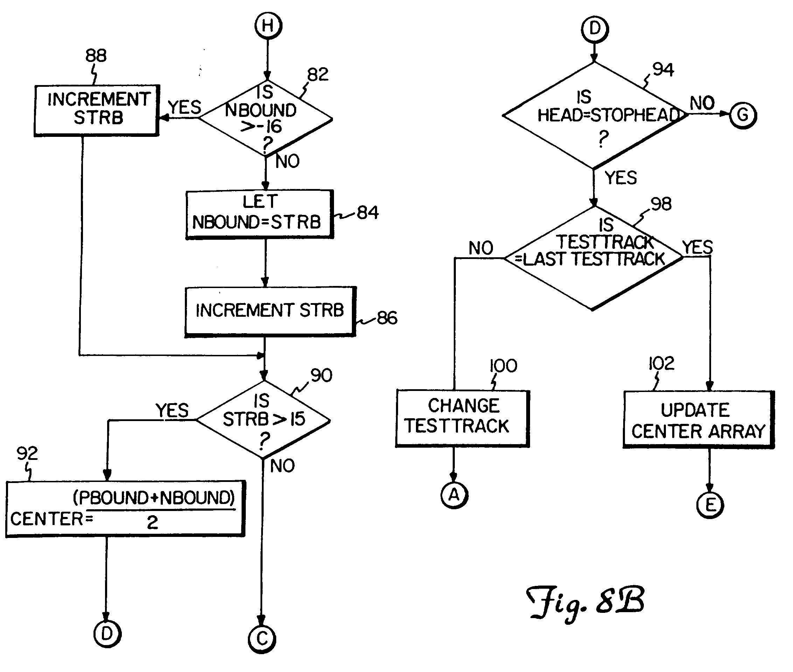

Figure 7 shows the relationship between the optimum window centre setting 52, as determined from the curves 46 and 48, as well as the optimum read window 50, and one peak of the read signal 32.

In the preferred embodiment, before the window centre setting is changed, the controller 42 is required to reach a certain confidence level that a change is required. In other words, the window centre setting will only be adjusted when the controller 42 reaches a certain confidence level that the probability of an error being one type of error is above or below 0.5. Then, the controller 42 will adjust the window centre setting in the direction of the lower of the two probabilities to equalise the probability of both error types.

The confidence level determined by the controller 42 is directly related to the number of samples read from the magnetic disk 12. To obtain a threshold confidence level, a certain number of samples must be taken. In the preferred embodiment, a minimum threshold number of errors must occur before the controller 42 will do any further processing to determine adjustment to the window centre setting. Using the binomial distribution for probability of an event happening in a random sequence, the probability of a certain number of shift right errors happening in a total number of errors is determined as follows:

$$P_{right} = \binom{n}{r} \cdot P(r)^r \cdot P(l)^{(n-r)} \qquad \text{Equation 1}$$

Where $P_{right}$ is the probability of r shift right errors happening, P(r) is the probability that each error is a shift right error, P(1) is the probability that each error is a shift left error, r is the total number of shift right errors recorded, 1 is the total number of shift left errors recorded, and n is the total number, r + 1, of errors recorded.

Also:

$$P_{left} = \binom{n}{l} \cdot P(r)^{(n-l)} \cdot P(l)^{(l)} \qquad \text{Equation 2}$$

Assuming, nominally, that P(r) = P(1) = 0.5, then:

$$P_{right} = \left(\frac{n!}{(r!)\,(n-r)!}\right) \cdot \left(\frac{1}{2^r}\right) \left(\frac{1}{2^l}\right) = \left(\frac{n!}{r!l!}\right) \left(\frac{1}{2^n}\right) \qquad \text{Equation 3}$$

If, during the read operations, only one error type is detected (e.g. a shift right error), then, using Equation 3, the following Table is generated:

Table 3

| n | r | P(l ≥ r) | Confidence level (%) that P(r)>0.5 |
|---|---|---|---|
| 1 | 1 | 0.5 | 50% |
| 2 | 2 | 0.25 | 75% |
| 3 | 3 | 0.125 | 87.5% |
| 4 | 4 | 0.0625 | 93.75% |
| 5 | 5 | 0.03125 | 96.88% |
| 6 | 6 | 0.015625 | 98.44% |
| 7 | 7 | 0.0078125 | 99.22% |

Where P(l ≥ r) is the probability that *l* ≥ *r*.

As soon as the controller 42 reaches, for example, a 90% confidence level that P(r) is greater than 0.5, then it adjusts the window centre setting in the register 44 to the left, thereby tending to equalise P(r) and P(l). In Table 3 above, that would require four successive shift right errors to be detected.

In another example, where one error of a different type occurs in this sequence, the following Table can be generated:

Table 4

| n | r | l | P $(l \geq r)$ | Confidence level (%) that P(r)>0.5 |
|---|---|---|---|---|
| 1 | 1 | 0 | 0.50 | 50% |
| 2 | 1 | 1 | 0.75 | 25% |
| 3 | 2 | 1 | 0.50 | 50% |
| 4 | 3 | 1 | 0.3125 | 68.75% |
| 5 | 4 | 1 | 0.1875 | 81.25% |
| 6 | 5 | 1 | 0.109375 | 89.06% |
| 7 | 6 | 1 | 0.0625 | 93.75% |
| 8 | 7 | 1 | 0.03516 | 96.50% |

In this case, in order to reach confidence level of 90% six shift right errors occur while only one shift left error occurs.

Practically, it is necessary to set a threshold confidence level in order to keep the controller 42 from "hunting" for the optimum level. In one preferred embodiment, the confidence level of 85 % is set and another threshold is set whereby at least three to four errors must be detected before the confidence level is checked. If all errors are of the same type (either shift left errors or shift right errors), then the confidence level can be immediately extracted. If not, some calculations need to be done. For example, the confidence level that the probability of an error being a shift right error is greater than 0.5 is represented by:

$$P(P(r) > 0.5) = 1 - \sum_{y=r}^{n} \left( \frac{n!}{y! \quad (n-y)!} \right) \left( \frac{1}{2^n} \right) \qquad \text{Equation 4}$$

Similarly, the confidence level that the probability that an error will be a shift left error is greater than 0.5 is represented by:

$$P(P(l) > 0.5) = 1 - \sum_{y=l}^{n} \left( \frac{n!}{y! \quad (n-y)!} \right) \left( \frac{1}{2^n} \right) \qquad \text{Equation 5}$$

If the confidence level of either of the above two equations is greater than the threshold confidence level (in this preferred embodiment 85 %), then the window centre settings are adjusted. If not, no adjustment is made until the threshold confidence level is reached. Alternatively, the maximum number of a certain error type (either shift left or shift right) can be determined and a confidence level check can be performed on that error type. Then, the appropriate adjustment of the window centre setting can be made.

<u>Operation</u>

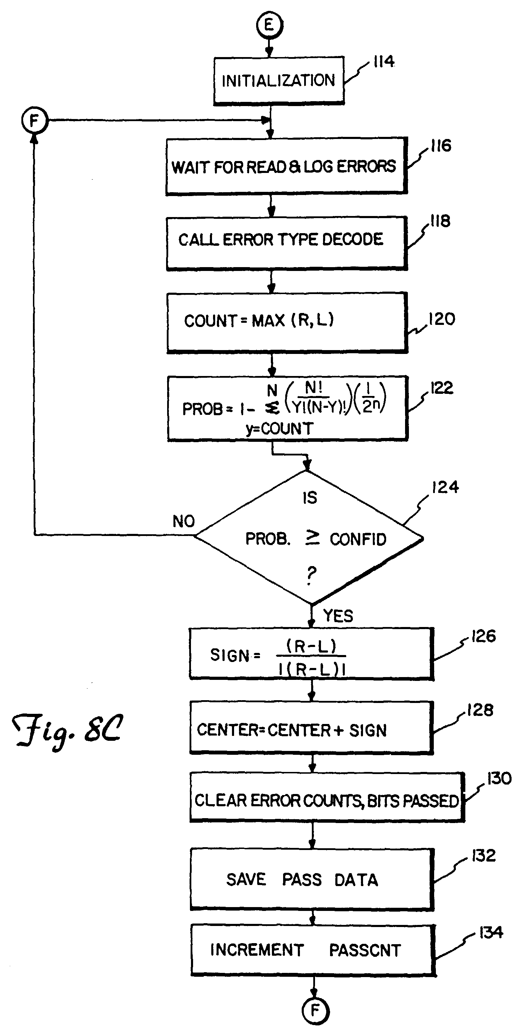

Figures 8a, 8b and 8c show a flow chart illustrating the operation of the controller 42 in performing the coarse and fine adjustments to the window centre settings in the read chain 34. For ease of reference, Figures 8a, 8b and 8c should be placed in vertical relationship with one another with Figure 8a on the top and Figure 8c on the bottom. Figures 8a, 8b and 8c in this preferred embodiment, refer to strobe values. These strobe values correspond to values used with a National Semiconductor 8459 integrated circuit chip. The strobe values vary, in units of percent, between -27% and +27% with 0% corresponding to a nominal strobe value. Therefore, where the controller 42 determines that the window centre setting must be shifted to the left, the strobe value for the National Semiconductor 8459 integrated circuit chip is moved from, for example, 0% to -1%. Similarly, where the controller 42 determines that the window centre setting must be shifted to the right, the strobe value on the National Semiconductor 8459 integrated circuit chip is moved, for example, from 0% to 1%, or from 1% to 2%, etc. It will be understood by those skilled in the art that a variety of circuits could be used to perform this function, and the National Semiconductor 8459 is only one preferred embodiment.

The following terms are employed in Figures 8a, 8b and 8c:

CENTRE is an array of window centre strobe setting values for individual heads (or zones per head). CENTRE is loaded with default values upon power up to read various commands for disk drive configurations. Then, CENTRE is loaded with a nominal value if coarse tuning is to be performed. If not, CENTRE is loaded with values for window centres which were stored during previous execution.

RDCNT is a variable representing the maximum number of reads to be performed on a test track.

MAXE is a variable representing the maximum number of errors to allow on a test track.

TESTTRACK is a pre-stored location on the magnetic disk where the read only test for window centre should be performed.

CONFID is a variable representing the confidence level threshold for moving strobe settings (i.e. 85% in this preferred embodiment).

PASSCNT is a variable indicating the number of adjustments made to window centre settings for statistical print out.

STRB is a strobe setting.

NBOUND is the negative boundary of strobe settings during coarse tuning.

PBOUND is the positive boundary of strobe settings during coarse tuning.

ERCNT is the number of errors logged for read operations.

STOPHEAD is a variable indicating coarse tuning has been performed for the last head.

READTK is a variable indicating the number of reads per test track which have been executed.

COUNT is a variable indicating number of errors.

MAX(r,l) is a variable indicating the maximum number of errors of the majority type which have been logged.

SIGN is a variable indicating the direction of correction to be made in adjusting strobe settings.

N is a total number of shift right and shift left errors logged.

WIDEBAND is a term used to designate whether the coarse tuning operation should be performed to accelerate window centre seeking. It should be noted that the optimum window setting can be determined using only the fine tuning technique. However, by using the coarse tuning operation, the window centre setting can be set more quickly.

The coarse tuning routine is initialised and the array CENTRE is loaded with nominal values. It should be noted that CENTRE could also be loaded with values which were stored during a previous coarse tuning routine. These operations are indicated in blocks 60 and 62. Next, the controller 42 determines whether the coarse tuning operation is to be performed. This is indicated in block 64. If not, the controller 42 skips to the fine tuning routine. However, if WIDEBAND equals 1 (the coarse tuning technique is to be performed), then the controller 42 causes the actuator 18 to perform a seek operation for the first head in the magnetic disk drive 10, thereby moving the first head (e.g. head 0) to the test track. This is indicated by block 66.

Next, the controller 42 determines whether the particular cylinder over which the selected transducer is flying is a read/writable cylinder. If not, the controller 42 determines whether there are any test tracks left to test. If so, the next test track is determined and the controller 42 causes the actuator 18 to seek to that test track. This is indicated by block 68, 70 and 72. If the test track over which the selected transducer is flying is in a read/writable cylinder, then the controller 42 sets the strobe value to -15% and sets the negative boundary to -16% and the positive boundary to positive 16%. This is indicated by block 74.

Next, the read errors in reading from the selected test track are read and logged. This is indicated by block 76. Then, the total error count is compared to the maximum number of errors allowed per test track. If the total error count is less than the maximum number of errors allowed per test track, then the number of read operations which have been performed for that test track is compared to the maximum number of reads allowed per test track. This is indicated in block 80. If more read operations are required, then the controller 42 repeats the steps taken in blocks 76 and 78. This is indicated in block 80.

Next, the controller 42 determines whether the negative boundary is greater than -16%. If not, the negative boundary is set the current stobe value and the strobe value is incremented. This is indicated in blocks 82, 84 and 86. If the negative boundary is greater than -16%, then the strobe value is simply incremented. This is indicated in block 88.

The strobe value is then examined to see whether it is greater than 15. If not, the controller 42 returns to operation block 76. If it is, then the CENTRE array is set to the centre point between the current positive and negative boundaries. This is indicated in blocks 90 and 92. Then, the controller 42 determines whether coarse tuning must be performed for any other heads or test tracks in the disk drive 10. If so, the controller 42 repeats the appropriate steps. If not, the controller 42 updates the CENTRE array appropriately and moves on to the fine tuning operation. This is indicated in blocks 94, 96, 98, 100 and 102.

If, in block 78, the total number of errors counted during the read operations is greater than the maximum number of errors allowed on the given test track, then the absolute value of the negative boundary is compared with the absolute value of the positive boundary. This is indicated in block 104. If the latter is not greater than the former, the answer determined in block 104 is NO, and the strobe is incremented and the controller 42 determines whether the present value of the strobe is greater than 15. If not, the controller 42 returns to block 76. If so, the controller 42 goes to block 94. This is indicated in blocks 106 and 108.

If, in block 104, the absolute value of the negative boundary is less than the absolute value of the positive boundary, then the positive boundary is set to the current strobe value and the CENTRE array is set to the mid-point between the positive and negative boundaries. This is indicated in blocks 110 and 112. Then, the controller 42 determines whether any other heads or test tracks must be coarsely tuned. If not, the controller moves onto the fine tuning operation.

In the fine tuning technique, the strobe value for the National Semiconductor 8459 integrated circuit chip will only be moved in the smallest increments allowed by the integrated circuit chip. Therefore, all that must be determined is whether the confidence level is above the confidence level threshold, and which direction the window centre setting must be adjusted.

Once the fine tuning technique is initialised, the controller 42 can either wait for a read command, as indicated in block 114 or can exercise the read operation when the drive is idle. The controller 42 exercises the read command by continuously reading test tracks and updating the window centre settings. Where power requirements are not critical, the latter technique may be used. However, in this preferred embodiment, block 116 indicates that the controller 42 waits for a read command before reading and logging errors.

Once errors are logged, the controller 42 determines which type of errors (i.e. either shift left or shift right) are logged. This is determined, as discussed earlier, by analysing the read error characteristics as they are read in the 2, 7 encoded bit stream. This is indicated in block 118. Next, the controller 42 determines which one of the number of shift right or shift left errors detected is the greater and determines the confidence level using the number of errors of the majority type determined. This is indicated in blocks 120 and 122. If the confidence level is less than the confidence level threshold, then the controller 42 returns to block 116 to log more error samples. This is indicated in block 124.

However, if the confidence level is greater than or equal to the confidence level threshold, then a window centre setting adjustment is required and the controller 42 determines the direction in which the adjustment must be made. This is indicated in block 126. Then, the strobe value stored in the CENTRE array is updated by moving the appropriate strobe value one unit in the direction determined in block 126. This is indicated in block 128. Next, the error counters are cleared and the CENTRE array is written to the magnetic disk so the strobe value stored in the CENTRE array can be retrieved as default settings during the next read operation. This is shown in blocks 130, 132 and 134.

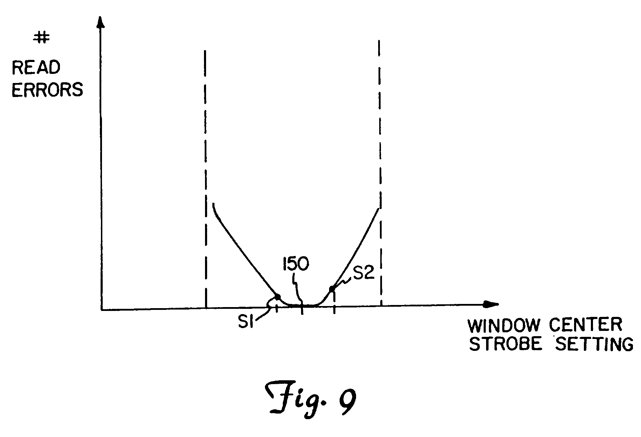

Figure 9 is a graph showing the number of read errors plotted against window centre strobe settings. In some cases, it may happen that the integrated circuit chip used to set the window centre settings, such as the National Semiconductor 8459 integrated circuit chip, may have centre settings which can only be adjusted in increments. Those increments may be too large to hit the exact optimum window centre setting, such as 150 shown in Figure 9. Instead, the two closest strobe settings may be strobe setting S1 and S2, which shift the window centre around the point 150 but never actually reach exactly the optimum window centre setting 150. In such a case, instability may exist in the disk drive 10 in that the controller 42 would continually oscillate the strobe setting in the register 44 between the points S1 and S2.

Therefore, in this preferred embodiment, the controller 42 stores the strobe setting determined during the previous fine tuning operation and also stores the error rate associated with that strobe setting. Then, when the controller 42 determines that an adjustment is required, the controller 42 determines whether the adjustment will be back to the strobe setting. If so, the controller 42 determines whether the number of read errors associated with that previous strobe setting are greater or less than the number of read errors associated with the present strobe setting. If they are less, the controller 42 makes the desired adjustment. If not, the controller 42 dis-regards the adjustments and leaves the strobe setting at the present value.

The coarse and fine tuning operations can be performed for each transducer in the magnetic disk drive 10. Further, such routines can be performed for a plurality of zones on each magnetic disk 12 in the disk drive 10. Therefore, very accurate window centre settings can be adjusted for each transducer, magnetic disk and zone in the disk drive 10. Furthermore, by using the types of errors detected to indicate the direction of needed correction, a closed loop feed back system is used to adaptively adjust the window centre setting.

By continuously updating the window centre settings for each head or disk, or zone in the disk drive 10, the controller 42 can adjust for signal time shifting in the read signal 32 caused by temperature variation, ageing, voltage variation and timing variations in electronic circuits in the disk drive 10. This improves the error rate during read operations and also increases the manufacturing yield for disk drives.

In addition, if new printed circuit boards or components must be added to the disk drive 10, any timing variations caused by the new components or printed circuit boards is almost immediately adjusted for by using the technique of the present invention.

## Claims

1. A method of adjusting a window centre in a read channel (34) of a magnetic drive (14, 16, 18, 19) suitable for reading data from a magnetic disk (10), including reading data from the magnetic disk by performing a number of read operations, characterised by detecting a number of shift right read errors made while reading the data, said shift right read errors being caused by the read window centre setting being shifted to the right of the optimal setting, detecting a number of shift left read errors made while reading the data, said shift left read errors being caused by the read window centre being shifted to the left of the optimal setting, and determining an adjusted window centre setting based on the number of shift right read errors detected and the number of shift left read errors detected.

2. A method according to first claim 1 characterised in that the step of detecting shift right read errors includes detecting a number of shift right once read errors during the read operation.

3. A method according to claim 1 or claim 2 characterised in that the step of detecting shift left read errors includes detecting a number of shift left once read errors during the read operations.

4. A method according to any preceding claim characterised in that the step of determining an adjusted window centre setting comprises determining a window centre adjustment value and a window centre adjustment direction based on the detected number of shift left and shift right read errors.

5. A method according to any preceding claim characterised in that the step of determining an adjusted window centre setting comprises determining an adjustment confidence level by calculating the probability that the probability that an error is one type of error, a shift right read error or a shift left read error, is greater than 0.5, comparing the adjustment confidence level with a confidence level threshold, and altering the window centre setting if the adjustment confidence level exceeds the confidence level threshold.

6. A method according to any preceding claim characterised by the window centre being altered from a present window centre setting to the adjusted window centre setting and by the number of read errors detected at the immediately preceding window centre setting being stored and by, when the adjusted window centre setting is the immediately preceding window centre setting, altering the window centre setting to the adjusted window centre setting only if the number of read errors detected at the present window centre setting exceeds the stored number of read errors detected at the immediately preceding window centre setting.

7. A method according to claim 4, wherein the step of determining an adjustment direction comprises:

determining a shift right probability based on the number of shift right read errors detected, the shift right probability representing a probability that a shift right read error will be detected during a read operation; determining a shift left probability based on the number of shift left read errors detected, the shift left probability representing a probability that a shift left read error will be detected during a read operation; comparing the shift right probability with the shift left probability; and determining an adjustment direction based on the comparison of the shift right probability with the shift left probability, adjustment of the window centre setting in the adjustment direction tending to equalise the shift right probability and the shift left probability.

8. Apparatus for determining an adjusted window centre setting in a read channel (34) of a magnetic disk drive (14, 16, 18, 19), the magnetic disk drive being suitable for reading data from a magnetic disk (10), including reading means (26) for reading data from the magnetic disk by performing a number of read operations, characterised by shift right error detection means (42) coupled to the reading means for detecting a number of shift right read errors during the read operations said shift right read errors being caused by the read window centre setting being shifted to the right of the optimal setting, shift left error detection means (42) coupled to the reading means for detecting a number of shift left read errors during the read operations, said shift left read errors being caused by the read window centre setting being shifted to the left of the optimal setting and adjustment means (42, 44) coupled to the shift right and shift left error detection means for determining an adjusted window centre setting based on the number of shift right read errors detected and the number of shift left read errors detected.

9. Apparatus according to claim 8 characterised in that the shift right error detection means comprise means for detecting a number of shift right once read errors.

10. Apparatus according to any of claims 8 or 9 characterised in that the shift left error detection means comprise means for detecting a number of shift left once read errors.

**11.** Apparatus according to claim 8 characterised in that the means for determining an adjusted window centre setting comprise means for determining a window centre adjustment value and a window centre adjustment direction based on the detected number of shift right and shift left read errors.

**12.** Apparatus according to any one of claims 8 to 10 characterised in that the means for determining an adjusted window centre setting comprise means for determining an adjustment confidence level by calculating the probability that the probability that an error is one type of error, a shift right read error or a shift left read error, is greater than 0.5, means for comparing the adjustment confidence level with a confidence level threshold, and means for calculating a new window centre setting if the adjustment confidence level exceeds the confidence level threshold.

**Revendications**

**1.** Procédé pour ajuster le centre d'une fenêtre sur un canal de lecture (34) d'une unité magnétique (14, 16, 18, 19) apte à la lecture de données sur un disque magnétique (10) comprenant des données de lecture en provenance du disque magnétique, grâce à l'exécution d'un certain nombre d'opérations de lecture, caractérisé en ce qu'il consiste à détecter un certain nombre d'erreurs de lecture par décalage à droite, commises pendant la lecture des données, lesdites erreurs de lecture par décalage à droite étant dues à un décalage du réglage du centre de la fenêtre de lecture vers la droite du réglage optimal, à détecter un certain nombre d'erreurs de lecture par décalage à gauche commises pendant la lecture des données, lesdites erreurs de lecture par décalage à gauche étant dues à un décalage du centre de la fenêtre de lecture vers la gauche du réglage optimal, et à déterminer un réglage ajusté du centre de la fenêtre, basé sur le nombre des erreurs de lecture par décalage à droite détectées et sur le nombre des erreurs de lecture par décalage à gauche, détectées.

**2.** Procédé selon la revendication 1, caractérisé en ce que l'étape de détection des erreurs de lecture par décalage à droite consiste à détecter un certain nombre d'erreurs de lecture par un seul décalage à droite pendant l'opération de lecture.

**3.** Procédé selon la revendication 1 ou 2, caractérisé en ce que l'étape de détection des erreurs de lecture par décalage à gauche comprend la détection d'un certain nombre d'erreurs de lecture par un seul décalage à gauche pendant l'opération de lecture.

**4.** Procédé selon l'une quelconque des revendications précédentes, caractérisé en ce que l'étape de détermination d'un réglage ajusté du centre de la fenêtre comprend la détermination d'une valeur d'ajustement du centre de la fenêtre et d'une direction d'ajustement du centre de la fenêtre basée sur le nombre des erreurs de lecture par décalage à gauche et par décalage à droite, détectées.

**5.** Procédé selon l'une quelconque des revendications précédentes, caractérisé en ce que l'étape de détermination d'un réglage ajusté du centre de fenêtre comprend la détermination d'un niveau de confiance d'ajustement en calculant la probabilité pour que la probabilité qu'une erreur soit d'un seul type, erreur de lecture par décalage à droite ou erreur de lecture par décalage gauche, soit supérieure à 0,5, comparativement au niveau de confiance d'ajustement avec un seuil de niveau de confiance, et en modifiant le réglage du centre de la fenêtre si le niveau de confiance de l'ajustement dépasse le seuil du niveau de confiance.

**6.** Procédé selon l'une quelconque des revendications précédentes, caractérisé en ce que le centre de la fenêtre passe du réglage actuel du centre de la fenêtre au réglage ajusté du centre de la fenêtre et par le fait que le nombre des erreurs de lecture détectées pour le réglage du centre de fenêtre qui précède immédiatement est gardé en mémoire, et lorsque le réglage ajusté du centre de la fenêtre est le réglage du centre de la fenêtre qui précède immédiatement, le réglage du centre de la fenêtre est remplacé par le réglage ajusté du centre de la fenêtre, uniquement si le nombre des erreurs de lecture détectées pour le présent réglage du centre de la fenêtre dépasse le nombre mémorisé des erreurs de lecture détectées pour le réglage du centre de la fenêtre précédant immédiatement.

**7.** Procédé selon la revendication 4, dans lequel l'étape de détermination d'une direction d'ajustement comprend les opérations suivantes :

déterminer une probabilité de décalage à droite à partir du nombre des erreurs de lecture par décalage à droite, détectées, la probabilité de décalage à droite représentant une probabilité pour qu'une erreur de lecture par décalage à droite soit détectée pendant une opération de lecture ;

déterminer une probabilité de décalage à gauche à partir du nombre des erreurs de lecture par décalage à gauche détectées, la probabilité de décalage à gauche représentant une probabilité pour qu'une erreur de lecture par décalage à gauche soit détectée pendant une opération de lecture ;

comparer la probabilité de décalage à droite avec la probabilité de décalage à gauche ; et

déterminer une direction d'ajustement d'après la comparaison de la probabilité de décalage à droite avec la probabilité de décalage à gauche, l'ajustement du réglage du centre de la fenêtre dans la direction d'ajustement ayant tendance à égaliser la probabilité de décalage à droite et la probabilité de décalage à gauche.

8. Appareil pour déterminer un réglage ajusté du centre de la fenêtre dans un canal de lecture (34) d'une unité de disque magnétique (14, 16, 18, 19), l'unité de disque magnétique étant apte à lire des données d'un disque magnétique (10), comprenant des moyens de lecture (26) pour lire des données du disque magnétique par exécution d'un certain nombre d'opérations de lecture, caractérisé par des moyens de détection d'erreurs par décalage à droite (42) couplés aux moyens de lecture, pour détecter un certain nombre d'erreurs de lecture par décalage à droite pendant les opérations de lecture, lesdites erreurs de lecture par décalage à droite étant dues à un décalage du centre de la fenêtre de lecture vers la droite du réglage optimal, des moyens de détection d'erreurs par décalage à gauche (42) couplés aux moyens de lecture, pour détecter un certain nombre d'erreurs de lecture par décalage à gauche pendant les opérations de lecture, lesdites erreurs de lecture par décalage à gauche étant dues à un décalage du réglage du centre de la fenêtre de lecture vers la gauche du réglage optimal, et des moyens d'ajustement (42, 44) couplés auxdits moyens de détection d'erreurs par décalage à droite et par décalage à gauche pour déterminer un réglage ajusté du centre de la fenêtre en fonction du nombre des erreurs de lecture par décalage à droite détectées et du nombre des erreurs de lecture par décalage à gauche détectées.

9. Appareil selon la revendication 8, caractérisé en ce que les moyens de détection des erreurs par décalage à droite comprennent des moyens pour détecter un certain nombre d'erreurs de lecture par un seul décalage à droite.

10. Appareil selon l'une quelconque des revendications 8 ou 9, caractérisé en ce que les moyens de détection d'erreurs par décalage à gauche comprennent des moyens pour détecter un certain nombre d'erreurs de lecture par un seul décalage à gauche.

11. Appareil selon la revendication 8, caractérisé en ce que les moyens pour déterminer un réglage ajusté du centre de la fenêtre comprennent des moyens pour déterminer une valeur d'ajustement du centre de la fenêtre et une direction d'ajustement du centre de la fenêtre à partir du nombre d'erreurs de lecture par décalage à droite et par décalage à gauche, détectées.

12. Appareil selon l'une quelconque des revendications 8 à 10, caractérisé en ce que les moyens pour déterminer un réglage ajusté du centre de la fenêtre comprennent des moyens pour déterminer un niveau de confiance d'ajustement en calculant la probabilité pour que la probabilité d'une erreur soit d'un seul type d'erreur, une erreur de lecture par décalage à gauche ou une erreur de lecture par décalage à droite, soit supérieure à 0,5, des moyens pour comparer le niveau de confiance d'ajustement avec un seuil de niveau de confiance et des moyens pour calculer un nouveau réglage du centre de la fenêtre si le niveau de confiance d'ajustement dépasse le seuil du niveau de confiance.

## Patentansprüche

1. Verfahren zum Abgleich eines Fenster-Mittelpunktes in einem Lesekanal (34) eines Magnetplattenlaufwerks (14,16,18,19), das Daten von einer Magnetplatte (10) lesen kann, unter Einschluß des Lesens von Daten von der Magnetplatte durch Ausführen einer Anzahl von Lesevorgängen,

gekennzeichnet durch die Feststellung einer Anzahl von Rechtsverschiebungs-Lesefehlern, die beim Lesen der Daten auftreten, wobei die Rechtsverschiebungs-Lesefehler dadurch hervorgerufen werden, daß die Lesefenster-Mittelpunktseinstellung gegenüber der optimalen Einstellung nach rechts verschoben wird, die Feststellung einer Anzahl von Linksverschiebungsfehlern, die beim Lesen der Daten auftreten, wobei diese Linksverschiebungs-Lesefehler dadurch hervorgerufen werden, daß der Lese-Fenster-Mittelpunkt gegenüber der optimalen Einstellung nach links verschoben wird, und die Bestimmung einer abgeglichenen Fenster-Mittelpunktseinstellung auf der Grundlage der Anzahl der festgestellten Rechtsverschiebungs-Lesefehler und der Anzahl der festgestellten Linksverschiebungs-Lesefehler.

**2.** Verfahren nach Anspruch 1,
dadurch gekennzeichnet, daß der Schritt der Feststellung von Rechtsverschiebungs-Lesefehlern die Feststellung einer Anzahl von Einfach-Rechtsverschiebungs-Lesefehlern während des Lesevorganges einschließt.

**3.** Verfahren nach Anspruch 1 oder 2,
dadurch gekennzeichnet, daß der Schritt der Feststellung von Linksverschiebungs-Lesefehlern die Feststellung einer Anzahl von Einfach-Linksverschiebungs-Lesefehlern während der Lesevorgänge einschließt.

**4.** Verfahren nach einem der vorhergehenden Ansprüche, dadurch gekennzeichnet, daß der Schritt der Bestimmung einer abgeglichenen Fenster-Mittelpunktseinstellung die Bestimmung eines Fenstermittelpunkt-Abgleichwertes und einer Fenstermittelpunkt-Abgleichrichtung auf der Grundlage der festgestellten Anzahl von Linksverschiebungs- und Rechtsverschiebungs-Lesefehlern umfaßt.

**5.** Verfahren nach einem der vorhergehenden Ansprüche, dadurch gekennzeichnet, daß der Schritt der Bestimmung einer abgeglichenen Fenstermittelpunkt-Einstellung die Bestimmung eines Abgleich-Zuverlässigkeitspegels durch Berechnen der Wahrscheinlichkeit, daß die Wahrscheinlichkeit, daß ein Fehler von einer Art von Fehler, ein Rechtsverschiebungs-Lesefehler oder ein Linksverschiebungs-Lesefehler, größer als 0,5 ist, den Vergleich des Abgleich-Zuverlässigkeitspegels mit einem Zuverlässigkeitspegel-Schwellenwert und die Änderung der Fenstermittelpunkt-Einstellung umfaßt, wenn der Abgleich-Zuverlässigkeitspegel den Zuverlässigkeitspegel-Schwellenwert übersteigt.

**6.** Verfahren nach einem der vorhergehenden Ansprüche, dadurch gekennzeichnet, daß der Fenstermittelpunkt von der derzeitigen Fenstermittelpunkt-Einstellung auf die abgeglichene Fenstermittelpunkt-Einstellung geändert wird, und daß die Anzahl der bei der unmittelbar vorhergehenden Fenstermittelpunkt-Einstellung festgestellten Lesefehler gespeichert wird, und daß, wenn die abgeglichene Fenstermittelpunkt-Einstellung die unmittelbar vorhergehende Fenstermittelpunkt-Einstellung ist, die Fenstermittelpunkt-Einstellung auf die abgeglichene Fenstermittelpunkt-Einstellung nur dann geändert wird, wenn die Anzahl der bei der derzeitigen Fenstermittelpunkt-Einstellung festgestellten Lesefehler die gespeicherte Anzahl von Lesefehlern übersteigt, die bei der unmittelbar vorhergehenden Fenstermittelpunkt-Einstellung festgestellt wurden.

**7.** Verfahren nach Anspruch 4,
bei dem der Schritt der Bestimmung einer Abgleichrichtung folgende Schritte umfaßt:

Bestimmung einer Rechtsverschiebungs-Wahrscheinlichkeit auf der Grundlage der Anzahl der festgestellten Rechtsverschiebungs-Lesefehler, wobei die Rechtsverschiebungs-Wahrscheinlichkeit eine Wahrscheinlichkeit darstellt, daß ein Rechtsverschiebungs-Lesefehler während eines Lesevorganges festgestellt wird,
Bestimmung einer Linksverschiebungswahrscheinlichkeit auf der Grundlage der Anzahl der festgestellten Linksverschiebungs-Lesefehler, wobei die Linksverschiebungs-Wahrscheinlichkeit eine Wahrscheinlichkeit darstellt, daß ein Linksverschiebungs-Lesefehler während eines Lesevorganges festgestellt wird,
Vergleichen der Rechtsverschiebungs-Wahrscheinlichkeit mit der Linksverschiebungs-Wahrscheinlichkeit, und
Bestimmung einer Abgleichrichtung auf der Grundlage des Vergleichs der Rechtsverschiebungs-Wahrscheinlichkeit mit der Linksverschiebungs-Wahrscheinlichkeit, wobei der Abgleich der Fenster-Mittelpunktseinstellung in der Abgleichrichtung in einem derartigen Sinne wirkt, daß die Rechtsverschiebungs-Wahrscheinlichkeit und die Linksverschiebungs-Wahrscheinlichkeit gleich gemacht werden.

**8.** Vorrichtung zur Bestimmung einer abgeglichenen Fenstermittelpunkt-Einstellung in einem Lesekanal (34) eines Magnetplattenlaufwerkes (14,16,18,19), wobei das Magnetplattenlaufwerk zum Lesen von Daten von einer Magnetplatte (10) geeignet ist und Leseeinrichtungen (26) zum Lesen von Daten von der Magnetplatte durch Ausführen einer Anzahl von Lesevorgängen einschließt, gekennzeichnet durch Rechtsverschiebungs-Fehlerdetektoreinrichtungen (42), die mit den Leseeinrichtungen gekoppelt sind, um eine Anzahl von Rechtsverschiebungs-Fehlern während der Lesevorgänge festzustellen, wobei die Rechtsverschiebung-Lesefehler dadurch hervorgerufen werden, daß die Lesefenstermittelpunkt-Einstellung gegenüber der optimalen Einstellung nach rechts verschoben wird, Linksverschiebungs-Fehlerdetektoreinrichtungen (42), die mit den Leseeinrichtungen zur Feststellung einer Anzahl von Linksverschiebungs-Fehlern während der Lesevorgänge gekoppelt sind, wobei die LinksverschiebungsFehler dadurch hervorgerufen werden, daß die Lesefenstermittelpunkt-Einstellung gegenüber der optimalen Einstellung nach links verschoben ist, und Abgleicheinrichtungen (42,44), die mit den Rechtsverschiebungs- und Linksverschiebungs-Detektoreinrichtungen gekoppelt sind, um eine abgeglichene Fenstermittelpunkt-Einstellung auf der Grundlage der Anzahl der festgestellten Rechtsverschiebungsfehler und der Anzahl der festgestellten Linksverschiebungsfehler zu bestimmen.

9. Vorrichtung nach Anspruch 8,
dadurch gekennzeichnet, daß die Rechtsverschiebungs-Fehler-Detektoreinrichtungen Einrichtungen zur Feststellung einer Anzahl von Einfach-Rechtsverschiebungs-Lesefehlern umfassen.

10. Vorrichtung nach einem der Ansprüche 8 oder 9,
dadurch gekennzeichnet, daß die Linksverschiebungsfehler-Detektoreinrichtungen Einrichtungen zur Feststellung einer Anzahl von Einfach-Linksverschiebungs-Lesefehlern umfassen.

11. Vorrichtung nach Anspruch 8,
dadurch gekennzeichnet, daß die Einrichtungen zur Bestimmung einer abgeglichenen Fenstermittelpunkt-Einstellung Einrichtungen zur Bestimmung eines Fenstermittelpunkt-Abgleichwertes und einer Fenstermittelpunkt-Abgleichrichtung auf der Grundlage der festgestellten Anzahl von Rechtsverschiebungs- und Linksverschiebungs-Lesefehlern umfassen.

12. Vorrichtung nach einem der Ansprüche 8-10, dadurch gekennzeichnet, daß die Einrichtungen zur Bestimmung einer abgeglichenen Fenstermittelpunkt-Einstellung Einrichtungen zur Bestimmung eines Abgleich-Zuverlässigkeitspegels durch Berechnen der Wahrscheinlichkeit, daß die Wahrscheinlichkeit, daß ein Fehler von einer Fehlerart ist, einen Rechtsverschiebungs-Lesefehler oder einen Linksverschiebungs-Lesefehler, größer als 0,5 ist, Einrichtungen zum Vergleich des Abgleich-Zuverlässigkeitspegels mit einem Zuverlässigkeitspegel-Schwellenwert und Einrichtungen zur Berechnung einer neuen Fenstermittelpunkt-Einstellung umfassen, wenn der Abgleich-Zuverlässigkeitspegel den Zuverlässigkeitspegel-Schwellenwert übersteigt.

*Fig. 1A*

*Fig. 1B*

EP 0 462 732 B1

*Fig. 2*

*Fig. 4*

16

Fig. 3

EP 0 462 732 B1

# READ ERRORS

$Fig. 5$

%
DEVIATION OF WINDOW
CENTER SETTING FROM
OPTIMUM CENTER

O

EP 0 462 732 B1

Fig. 6

Fig. 7

*Fig. 8A*

INITIALIZE ⟋60

LOAD CENTER = NOM. ⟋62

IS WIDEBAND=1 ? ⟋64

NO → E

YES

A

SEEK TO TESTTRACK, HEAD∅ ⟋66

IS READ/WRITABLE CYLINDER ? ⟋68

NO

IS TESTTRACK=LAST TESTTRACK ? ⟋70

YES

NO

CHANGE TESTTRACK ⟋72

A

YES → B

INCREMENT HEAD ⟋96 ← G

B

STRB=-15, NBOUND=-16, PBOUND=+16 ⟋74

C

READ & LOG ERRORS ⟋76

IS ERCNT > MAXE ? ⟋78

YES → IS NBOUND < PBOUND ? ⟋104

NO → INCREMENT STROBE ⟋106

NO

IS READTK ≥ RDCNT ? ⟋80

NO

YES

H

YES (from 104)

LET PBOUND= STRB ⟋110

$$CENTER= \frac{(PBOUND+ NBOUND)}{2}$$ ⟋112

IS STRB > 15 ? ⟋108

NO

YES

D

20

EP 0 462 732 B1

(H)

88 — INCREMENT STRB

YES ← IS NBOUND >-16 ? 82

NO

LET NBOUND=STRB — 84

INCREMENT STRB — 86

90 — IS STRB > 15 ?

YES

NO

92 — $CENTER = \dfrac{(PBOUND+NBOUND)}{2}$

(D)

(C)

(D)

IS HEAD=STOPHEAD ? 94 — NO → (G)

YES

98 — IS TESTTRACK =LAST TESTTRACK

NO

YES

CHANGE TESTTRACK — 100

UPDATE CENTER ARRAY — 102

(A)

(E)

*Fig. 8B*

E

INITIALIZATION — 114

F

WAIT FOR READ & LOG ERRORS — 116

CALL ERROR TYPE DECODE — 118

COUNT = MAX (R, L) — 120

$$PROB = 1 - \sum_{y=COUNT}^{N} \left(\frac{N!}{Y!(N-Y)!}\right)\left(\frac{1}{2^n}\right)$$ — 122

IS

PROB. $\geq$ CONFID

? — 124

NO

YES

$$SIGN = \frac{(R-L)}{|(R-L)|}$$ — 126

*Fig. 8C*

CENTER = CENTER + SIGN — 128

CLEAR ERROR COUNTS, BITS PASSED — 130

SAVE PASS DATA — 132

INCREMENT PASSCNT — 134

F

*Fig. 9*